# EUROPÄISCHE PATENTANMELDUNG

(11) **EP 0 552 487 A2**
(43) Veröffentlichungstag der Anmeldung: **28.07.1993**
(21) Anmeldenummer: 92121851.7
(22) Anmeldetag: 23.12.1992
(51) Int. Cl.: B60R 16/02, B60T 8/88

(54) **Elektronisches Steuersystem für ein elektromagnetisches Stellmittel in einem Kraftfahrzeug mit einem Steuergerät**

(30) Priorität: 22.01.1992 DE 4201577
(71) Anmelder: ROBERT BOSCH GMBH, 70442 Stuttgart (DE)
(72) Erfinder: Dressler, Klaus, W-7121 Löchgau (DE); Walter, Gerhard, Dipl.-Ing. (BA), W-7016 Gerlingen (DE); Meder, Klaus, Dipl.-Ing., W-7257 Ditzingen (DE)

(57) **Zusammenfassung**

Die Erfindung betrifft ein elektronisches Steuersystem für ein elektromagnetisches Stellmittel (110) in einem Kraftfahrzeug mit einem Steuergerät (104) gemäß dem Oberbegriff des Anspruchs 1. Insbesondere eignet sie sich zur Ansteuerung eines elektromagnetischen Drosselventils einer Servolenkung eines Kraftfahrzeugs. Vom Steuergerät (104) wird ein Sollwert für den Stromfluß durch das elektromagnetische Stellmittel (110) bestimmt und an ein 1. Mittel (116) zur Regelung des Stromflusses weitergeleitet. Ein auf den Stromfluß durch das Stellmittel (110) empfindliches 2. Mittel (106) dient unter anderem der Fehlererkennung. Im 2. Mittel (106) ist bei vorgebbaren Betriebszuständen ein Diagnosesignal erzeugbar und das Ergebnis der Diagnose wird an das Steuergerät (104) weitergeleitet. Das Steuergerät aktiviert daraufhin eine Sicherheitsfunktion im Steuergerät (104) und/oder im 1. Mittel (116) und/oder im 2. Mittel (106), die das Stellmittel (110) in einen sicheren Betriebszustand versetzt. Die Aktivierung der Sicherheitsfunktion kann auch vom 1. Mittel (116) oder vom 2. Mittel (106) ohne Zutun des Steuergeräts veranlaßt werden oder es können vom 1. Mittel (116) und/oder vom 2. Mittel (106) begleitende Maßnahmen zur Fehlerbehandlung eingeleitet werden.

## Beschreibung

### Stand der Technik

Die Erfindung betrifft ein elektronisches Steuersystem für ein elektromagnetisches Stellmittel in einem Kraftfahrzeug mit einem Steuergerät gemäß Anspruch 1. Insbesondere eignet sie sich zur Ansteuerung eines elektromagnetischen Drosselventils (110) einer Servolenkung eines Kraftfahrzeugs.

Eine Einrichtung zur Steuerung einer Hinterradlenkung ist durch die DE 38 16 254 A1 bekannt. Dort steuert eine Recheneinheit, die 2 Rechner enthält, abhängig von den Parametern Lenkwinkel, Fahrgeschwindigkeit und Lenkradeinschlag, die von Sensoren an beide Rechner gemeldet werden, eine Lenkeinrichtung. Dabei berechnen beide Rechner unabhängig voneinander die dazu notwendigen Steuersignale. Im Notfall gibt jeder Rechner für sich unabhängig vom anderen Rechner ein Lenknotsignal an die Lenkeinrichtung ab, wodurch eine Steuerung der Lenkung gemäß eines Notbetriebskonzeptes bewirkt wird. Diese Vorrichtung hat den Nachteil, daß eine optimale Funktion nicht unter allen Betriebsbedingungen gewährleistet ist.

In der EP 0 353 995 A2 und der DE 37 39 558 A werden Verfahren zur Bestimmung des Lenkwinkels, der Längs- und der Querbeschleunigung beschrieben. Die Kenntnis dieser Größen ist für eine optimale Steuerung der Lenkung nötig.

Die elektronischen Bauelemente BT54XX (X variiert je nach Ausführungsform, z. B. BT5410) der Firma Siemens, L98XX (z. B. L9821) der Firma SGS-Thomson, BUK19XX (z. B. BUK196) der Firma Phillips und SP3XX der Firma Harris enthalten Schaltmittel und Mittel zum Erkennen verschiedener Fehlerzustände und stellen somit Realisierungsmöglichkeiten für einen HighsideSchalter, auf den im Beschreibungsteil näher eingegangen wird, dar.

Der Erfindung liegt die Aufgabe zugrunde, Mittel zur Ansteuerung eines elektromagnetischen Stellmittels zur Verfügung zu stellen, die einerseits einen möglichst geringen Aufwand erfordern und andererseits einen möglichst hohen Sicherheitsstandard aufweisen.

Diese Aufgabe wird erfindungsgemäß durch die Merkmale nach Anspruch 1 und die in den Unteransprüchen beschriebenen vorteilhaften Ausgestaltungen gelöst.

### Vorteile der Erfindung

Ein Vorteil der Erfindung besteht darin, daß in einer Notsituation eine zuverlässige Abschaltung der Stromversorgung des elektromagnetischen Stellmittels gewährleistet ist. In diesem Zusammenhang kann es je nach Einsatzgebiet sinnvoll sein, ein System entweder völlig abzuschalten oder einen Notbetrieb zu veranlassen.

Besonders vorteilhaft ist es dabei, daß ein Schaltmittel die Stromzufuhr zwischen dem elektromagnetischen Stellmittel und dem Pluspol der Batterie unterbricht. Dadurch wird erreicht, daß das elektromagnetische Stellmittel im Falle einer Abschaltung auf Massepotential liegt und daß der Stromfluß durch das Stellmittel auch im Fall eines Masseschlusses, der z. B. durch Defekte an der Isolation der Zuleitungen hervorgerufen werden kann, unterbrochen wird.

Über eine 2. Eingriffsmöglichkeit, die durch eine Stromregelung gegeben ist, ist auch im Fall einer Fehlfunktion oder Überbrückung des obengenannten Schaltmittels noch eine zuverlässige Unterbrechung des Stromflusses durch das elektromagnetische Stellmittel möglich. Es existieren also 2 völlig unterschiedliche Sicherheitsmechanismen, die zudem an völlig unterschiedlichen Stellen in den Stromkreis eingreifen. Dadurch wird ein hohes Maß an Sicherheit gewährleistet und es werden viele verschiedenartige Fehlersituationen beherrschbar. Eine Erweiterung auf mehr als 2 Sicherheitsmechanismen oder eine andere Anordnung der Schaltmittel ist problemlos möglich.

Auch eine besonders kostengünstige Version mit nur einem Sicherheitssystem ist realisierbar. Diese Version wird vorzugsweise in Bereichen, die nicht besonders kritisch für die Sicherheit sind, eingesetzt.

Die erfindungsgemäße Einrichtung kommt ohne eigene Kontrolleinheit aus, indem sie auf freie Kapazitäten der Kontrolleinheit eines bereits vorhandenen Steuergeräts zurückgreift. Die Kontrolleinheit des bereits vorhandene Steuergeräts kann z. B. durch einen oder mehrere Micro-Controller realisiert sein. Im Folgenden wird ein Ausführungsbeispiel mit 2 Micro-Controllern beschrieben. Diese beiden Micro-Controller werden durch die erfindungsgemäße Einrichtung nur wenig ausgelastet, da ihnen im Wesentlichen nur die Aufgabe übertragen wird, beim Auftreten von Fehlern geeignete Maßnahmen zu treffen und so die Fehlerüberwachung, mit der wenigstens eines der eingesetzten Schaltmittel betraut ist, zu unterstützen. Die Ansteuerung des elektromagnetischen Stellmittels wird von der weitgehend eigenständigen Stromregelung durchgeführt. Lediglich der 1. Micro-Controller ist zusätzlich mit der Ausgabe von Sollwerten an die Stromregelung betraut. Somit ist die Auslastung der beiden Micro-Controller derart gering, daß in der Regel die freien Kapazitäten der Micro-Controller eines bereits vorhandenen Steuergeräts ausreichen.

Die Endstufe der Stromregelung wird vorteilhafterweise getaktet betrieben, um die Verlustleistung der Bauelemente möglichst gering zu halten. Somit können kostengünstige Bauelemente mit kleinen Abmessungen verwendet werden. Außerdem ist die dem Bordnetz entzogene Leistung geringer als bei Dauerbetrieb, so daß der Generator für eine geringere Leistung ausgelegt werden kann. Falls es im konkreten Anwendungsfall günstiger ist, kann die Stromregelung auch kontinuierlich betrieben werden.

Ein weiterer Vorteil der Erfindung gegenüber dem Stand der Technik besteht darin, daß durch die Kombination mit einem bereits vorhandenen Steuergerät die Daten, die diesem bereits vorhandenen Steuergerät zur Verfügung stehen, auch von der Erfindung genutzt werden können. Beispielsweise ein Steuersystem für eine Vorderrad-Servolenkung, das die Micro-Controller eines Steuergeräts für eine Hinterradlenkung mitbenutzt, kann viele der am Steuergerät für die Hinterradlenkung anliegenden Sensorsignale mitbenutzen. Somit entfallen die Kosten für zusätzliche Sensoren und Zuleitungen. Indem man die Erfindung in einem bereits vorhandenen Steuergerät einsetzt, entfallen zusätzlich die Kosten, die bei eigenständigen Steuergeräten für Gehäuse, Platine, Stecker, Schutzbeschaltungen usw. aufgewendet werden müssen.

### Zeichnung

Die Erfindung wird nachstehend an Hand der in der Zeichnung dargestellten Ausführungsformen erläutert.

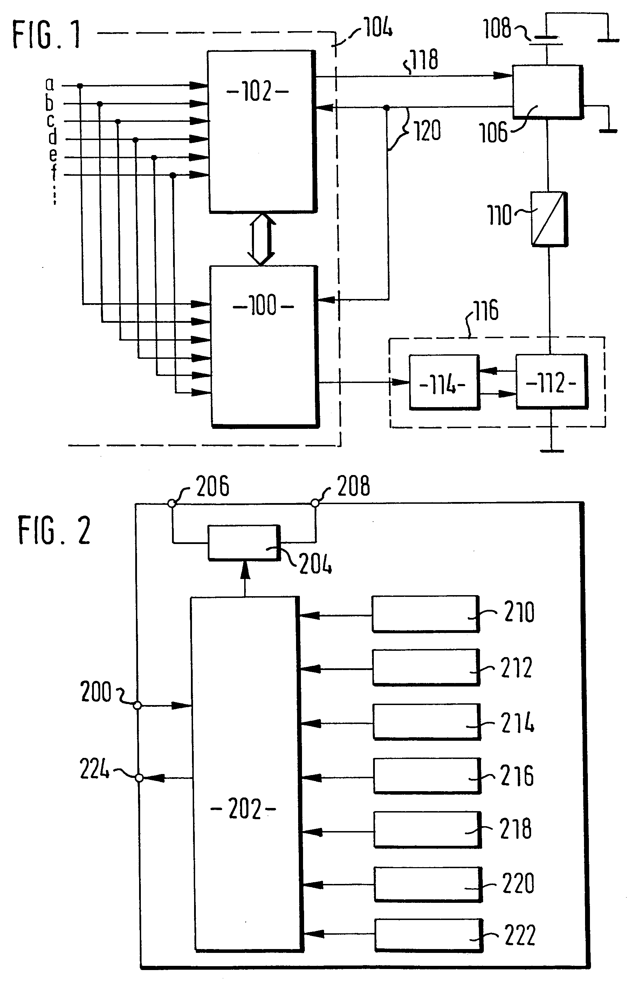

Es zeigen Fig. 1 ein Prinzipschaltbild eines Ausführungsbeispiels der Erfindung und Fig. 2 einen schematischen Aufbau eines Ausführungsbeispiels für einen an sich bekannten Highside-Schalter.

### Beschreibung eines Ausführungsbeispiels

Für die Beschreibung des Funktionsprinzips der Erfindung wird als elektromagnetisches Stellmittel ein Drosselventil für eine Servolenkung in einem Kraftfahrzeug gewählt. Der Einsatz der Erfindung ist aber nicht auf diese Anwendung beschränkt, sondern es können beliebige elektromagnetische Stellmittel angesteuert werden. Eine weitere Einsatzmöglichkeit der Erfindung stellt z. B. eine elektronische Steuerung im Zusammenhang mit dem Gaspedal im Kraftfahrzeug dar. Auch ein Einsatz bei Nutzfahrzeugen, z. B. Mengenbemessung bei Salzstreufahrzeugen oder Niveauregelung von Pflügen, ist möglich.

In Fig. 1 sind ein 1. Micro-Controller 100 und ein 2. Micro-Controller 102 dargestellt, die jeweils mit Sensorsignalen a, b, c, d, e, f usw. beaufschlagt werden. Die Sensorsignale a und b beinhalten die Drehzahlen verschiedener Räder, Sensorsignal c den Lenkwinkel, Sensorsignal d die Temperatur des Hydrauliköls, Sensorsignal e eine Information, aus der hervorgeht ob das ABS-System aktiv ist und Sensorsignal f die Tachoanzeige. Die beiden Micro-Controller sind in dem hier beschriebenen Ausführungsbeispiel Bestandteile eines Steuergeräts 104 für die Hinterradlenkung, dessen Funktionsbereich durch die Erfindung auf die Steuerung einer Vorderradlenkung erweitert wird, und stehen zwecks Datenaustausch miteinander in Verbindung. Der Micro-Controller 102 steuert über eine 1. Verbindungsleitung 118 einen Highside-Schalter 106, der zwischen dem Pluspol einer Batterie 108 und der Wicklung eines elektromagnetischen Ventils 110 angeordnet ist, und erhält Statusmeldungen von diesem Highside-Schalter über eine 2. Verbindungsleitung 120. An diese 2. Verbindungsleitung 120 ist auch der Micro-Controller 100 angeschlossen. Nach Masse hin ist dem elektromagnetischen Ventil 110 ein Lowside-Schalter 112 in Serie geschaltet, der von einem Regler 114 angesteuert wird und diesem Regler seinerseits Daten übermittelt. Der Regler 114 erhält Sollwertvorgaben vom Micro-Controller 100. Der LowsideSchalter 112 und der Regler 114 bilden zusammen die Stromregelung 116.

Nach dem Starten des Fahrzeugs wird das System vom Micro-Controller 100 und vom Micro-Controller 102 in Zusammenwirkung mit dem Highside-Schalter 106 auf Fehlerfreiheit überprüft. Es werden Fehlerzutände wie z. B. Kurzschluß, Batterieschluß, Masseschluß, Leitungsunterbrechung, Überlast, Übertemperatur, Unterspannung, Überspannung usw. abgeprüft. Nur wenn beide Micro-Controller zu dem Ergebnis kommen, daß kein Fehler vorliegt, gibt der Micro-Controller 102 die Stromzufuhr zum Magnetventil 110 durch den Higside-Schalter 106 frei.

Dem hier beschriebenen Pre-Drive-Test vor Fahrtbeginn schließt sich eine ständige Fehlerüberwachung durch den Highside-Schalter 106 während des Betriebs an. Ein auftretender Fehler wird sofort an die Micro-Controller 100 und 102 gemeldet, die daraufhin unabhängig voneinander geeignete Maßnahmen einleiten. Eine geeignete Maßnahme kann eine Unterbrechung des Stromflusses durch das Ventil 110 sein, die 1. vom Micro-Controller 102 mit Hilfe des Highside-Schalters 106 bewirkt werden kann und 2. durch den Lowside-Schalter 112, der zu diesem Zweck vom Regler 114 mit einem Tastverhältnis von Null angesteuert wird. Die 2. Unterbrechungsvariante wird vom Micro-Controller 100 durch Vorgabe des Sollwerts Null an den Regler 114 veranlaßt.

Im Normalbetrieb werden die Sollwerte für den Strom vom Micro-Controller 100 unter Berücksichtigung verschiedener Parameter bestimmt. Die Bestimmung der Sollwerte erfolgt über ein Kennfeld oder eine Kennlinie, die von diesen Parametern abhängen oder durch Berechnung nach einem vorgegebenen Algorithmus, in den diese Parameter eingehen. Als Parameter eignen sich z. B. die Fahrgeschwindigkeit, der Lenkwinkel, die Längs- und Querbeschleunigung, die Temperatur des Hydrauliköls, das Tachsignal usw. Diese Parameter stehen entweder unmittelbar als entsprechende Sensorsignale zur Verfügung, sind über ein Bus-System verfügbar oder lassen sich durch bekannte Verfahren aus den Sensorsignalen ermitteln. Zur Bestimmung der Längs- und Querbeschleunigung können entsprechende Beschleunigungssensoren eingesetzt werden oder es erfolgt eine Berechnung aus Größen wie Raddrehzahlen und Lenkwinkel, die jeweils durch geeignete Sensoren erfaßt und dem Hinterradlenkungs-Steuergerät übermittelt werden.

Die Sollwerte für den Strom werden vom Micro-Controller 100 entweder als analoge oder als pulsweitenmodulierte Signale an den Regler 114 weitergeleitet. Der Regler 114 erzeugt daraufhin seinerseits entsprechende pulsweitenmodulierte Signale zur Ansteuerung des Lowside-Schalters 112, der dadurch im Takt der Ansteuersignale geöffnet und geschlossen wird und dementsprechend den Stromfluß durch das Ventil 110 steuert. Dieses elektrische Signal wird durch das Ventil 110 in ein hydraulisches Signal umgewandelt. Die zur Regelung des Ventilstroms benötigten Istwerte werden dem Regler 114 vom Lowside-Schalter 112 oder einem geeigneten Aufnehmer übermittelt.

Anstelle des hier beschriebenen Steuergeräts 104 für die Hinterradlenkung ist auch ein Einsatz in anderen Steuergeräten, wie z. B. einem ABS- oder Motor-Steuergerät denkbar. Darüberhinaus läßt sich die Schaltung aus Fig. 1 auch als eigenständiges Gerät mit wenigstens einem eigenen Micro-Controller verwirklichen. Es können auch andere Steuerfunktionen als die Lenkungssteuerung übernommen werden, z. B. Steuerung der Luft- und/oder Kraftstoffzumessung einer Brennkraftmaschine. Dabei kann es sich als günstig erweisen, im Fehlerfall statt des Abschaltens des Systems ein Umschalten auf eine Notbetriebsart vorzunehmen. Die Ausführung des elektromagnetischen Stellmittels und die Auswahl der dem Steuersystem zugeführten Sensorsignale hängen von der jeweils realisierten Steuerfunktion ab. Das Stellmittel kann z. B. auch eine elektromagnetische Betätigungsvorrichtung für die Drosselklappe, eine Einspritzdüse, eine Einspritzpumpe usw. sein. Als Sensorsignale kommen außer den bereits genannten beispielsweise die Drosselklappenstellung, das Luft/Kraftstoff-Verhältnis, die Motordrehzahl, die Motortemperatur usw. in Frage.

Fig. 2 zeigt eine schematische Darstellung eines Ausführungsbeispiels des Highside-Schalters 106. Der Eingang 200 des Highside-Schalters 106 ist mit dem Ausgang des Micro-Controllers 102 verbunden. Intern wird das Steuersignal, das am Eingang 200 anliegt, in eine Logikschaltung 202 eingespeist, die einen elektronischen Schalter 204 entsprechend ansteuert. Über den elektronischen Schalter 204 können die beiden Anschlüsse 206 und 208 des Highside-Schalters miteinander verbunden werden. Die Anschlüsse 206 und 208 sind extern mit dem Pluspol der Batterie 108 bzw. mit dem Magnetventil 110 verbunden (siehe Fig. 1).

Weitere Bestandteile des Highsideschalters sind Mittel zum Erkennen verschiedener Fehlerzustände, und zwar Mittel zum Erkennen eines Kurzschlusses 210, eines Batterieschlusses 212, eines Masseschlusses 214, einer Leitungsunterbrechung 216, einer Überlast 218, einer Übertemperatur 220 und einer Über- und Unterspannung des Bordnetzes 222. Alle diese Mittel sind jeweils mit der Logikschaltung 202 verbunden, die die Sinale dieser Mittel auswertet, soweit möglich Gegenzmaßnahmen trifft, und eine dem Fehlerzustand entsprechende Statusmeldung über den Ausgang 224 an die Micro-Controller 100 und 102 weitergibt. Eine Gegenmaßnahme kann z. B. die Unterbrechung des Stromflusses mittels des Schalters 204 sein.

Die Mittel zur Fehlererkennung sind nach Funktionen aufgegliedert dargestellt. Die schaltungstechnische Realisierung ist nicht wesentlich für die Erfindung und stellt eine dem Fachmann geläufige Maßnahme dar.

Die Mittel Zur Fehlererkennung müssen nicht notwendigerweise im Highside-Schalter angeordnet sein. Es ist auch eine Realisierung in einem diskreten Aufbau möglich. Statt des hier beschriebenen Highside-Schalters kann dann ein Schalter einfacherer Bauform eingesezt werden. Auch die Anordnung der Schaltmittel als High- und Lowside-Schalter ist keineswegs zwingend. Die Aufgabe, die der Erfindung zugrunde liegt, kann auch durch andere Ausführungsformen, eine andere Anordnung und eine andere Anzahl der Schaltmittel gelöst werden. Wesentlich für die Erfindung sind die je nach Bedarf mehrkanalige Auslegung der Sicherheitsfunktion und die weitgehend eigenständige Ausführung der Regelung und Fehlerüberwachung, so daß in Kombination mit einem bereits vorhandenen Steuergerät eine zusätzliche Steuerfunktion mit hohem Sicherheitsstandard verwirklicht werden kann, die nur einen geringen Bruchteil der Rechenkapazität des Steuergeräts belegt.

Die Sicherheitsfunktion, die das Stellmittel in einen sicheren Zustand versetzt, kann im Steuergerät 104 und/oder im 1. Mittel 116 und/oder im 2. Mittel 106 und/oder in weiteren Mitteln realisiert sein. Die Aktivierung der Sicherheitsfunktion kann außer vom Steuergerät 104 auch vom 1. Mittel 116 oder vom 2. Mittel 106 oder von weiteren Mitteln ohne Zutun des Steuergeräts veranlaßt werden oder es können vom 1. Mittel 116 und/oder vom 2. Mittel 106 und/oder von weiteren Mitteln begleitende Maßnahmen zur Fehlerbehandlung eingeleitet werden.

## Patentansprüche

1. Elektronisches Steuersystem für ein elektromagnetisches Stellmittel (110) in einem Kraftfahrzeug mit einem Steuergerät (104), wobei
- wenigstens ein 1. Mittel (116) bereitgestellt wird zur Regelung des Stromflusses durch das elektromagnetische Stellmittel (110),
- ein Sollwert für den Stromfluß vom Steuergerät (104) ermittelt und für das 1. Mittel (116) bereitgestellt wird,
- ein 2. Mittel (106) bereitgestellt wird, mit dem der Stromfluß durch das Stellmittel (110) erfaßt werden kann,
- im 2. Mittel (106) bei vorgebbaren Betriebszuständen ein Diagnosesignal erzeugbar ist und das Ergebnis der Diagnose an das Steuergerät (104) weitergeleitet wird und
- selbständig und/oder auf Veranlassung des Steuergeräts (104) eine Sicherheitsfunktion im Steuergerät (104) und/oder im 2. Mittel (106) aktiviert wird, die das Stellmittel (110) in einen sicheren Betriebszustand versetzt.

2. Steuersystem nach Anspruch 1, dadurch gekennzeichnet, daß das 1. Mittel (116) in die Sicherheitsfunktion einbezogen werden kann.

3. Steuersystem nach Anspruch 1, dadurch gekennzeichnet, daß die Regelung des Stromflusses durch das Stellmittel (110) auf der Basis eines Soll-Ist-Vergleichs erfolgt.

4. Steuersystem nach einem der vorhergehenden Ansprüche, dadurch gekennzeichnet, daß das 1. Mittel (116) aus einem Regler (114) und einem von diesem Regler (114) mit einem pulsweitenmodulierten Signal beaufschlagbaren Schaltmittel (112) besteht, mit dem der Stromfluß durch das elektromagnetische Stellmittel (110) beeinflußt werden kann.

5. Steuersystem nach Anspruch 1, dadurch gekennzeichnet daß das 2. Mittel (106) zur Realisierung der Sicherheitsfunktion ein Schaltmittel umfaßt, mit dem der Stromfluß durch das elektromagnetische Stellmittel (110) beeinflußt werden kann.

6. Steuersystem nach einem der vorhergehenden Ansprüche, dadurch gekennzeichnet, daß das Steuergerät (104) wenigstens eine Kontrolleinheit enthält, die über wenigstens eine Verbindungsleitung die Aktivierung wenigstens eines Schaltmittels im Zusammenhang mit der Sicherheitsfunktion veranlassen kann.

7. Steuersystem nach Anspruch 6, dadurch gekennzeichnet, daß wenigstens eines der Schaltmittel in der Versorgungsspannung führenden Leitung und wenigstens eines in der Masseleitung des Stellmittels (110) angeordnet ist.

8. Steuersystem nach Anspruch 1, dadurch gekennzeichnet, daß vor Fahrtantritt und /oder während der Fahrt das Vorliegen wenigstens einer der Fehler Kurzschluß, Batterieschluß, Masseschluß, Leitungsunterbrechung, Überlast, Übertemperatur, Überspannung und Unterspannung erkannt wird.

9. Steuersystem nach den Ansprüchen 1 und 3, dadurch gekennzeichnet, daß der Sollwert für den Stromfluß durch das elektromagnetische Stellmittel (110) aus einem Kennfeld oder einer Kennlinie ermittelt wird, die jeweils von Parametern wie Fahrgeschwindigkeit, Lenkwinkel, Längsoder Querbeschleunigung, Motordrehzahl und Temperatur des Hydrauliköls abhängen oder aus diesen Parametern berechnet wird.

10. Steuersystem nach einem der vorhergehenden Ansprüche, gekennzeichnet durch ihren Einsatz im Zusammenhang mit wenigstens einem der folgenden Systeme aktive Dämpfung, Niveau-Regelung, ABS, Antriebsschlupfreduzierung, Motorsteuerung, Lenkung und Getriebesteuerung.
